# EUROPEAN PATENT SPECIFICATION

(11) **EP 1 161 402 B1**
(45) Date of publication and mention of the grant of the patent: **28.07.2004**
(21) Application number: 99962153.5
(22) Date of filing: 16.11.1999
(51) Int. Cl.: C02F 9/00, B01D 21/28, B01D 17/028

(54) **TANKS FOR TREATING WATER USED FOR WASHING MOTOR VEHICLES AND EQUIPMENT**
BEHÄLTER ZUR BEHANDLUNG VON ABWASSER AUS AUTOWASCHANLAGEN
CUVES POUR LE TRAITEMENT DES EAUX DE LAVAGE DE VEHICULES A MOTEUR, ET EQUIPEMENTS ASSOCIES

(30) Priority: 17.11.1998 IT MI982481
(43) Date of publication of application: 12.12.2001
(73) Proprietor: Pietrafraccia, Stefano E., 16121 Genova (IT)
(72) Inventor: Pietrafraccia, Stefano E., 16121 Genova (IT)
(74) Representative: Michelotti, Giuliano
(86) International application number: PCT/EP1999/009044
(87) International publication number: WO 2000/029338

(56) References cited:
- EP-A- 0 351 682
- EP-A- 0 561 170
- EP-A- 0 567 951
- DE-A- 4 040 007
- DE-A- 4 402 185
- DE-U- 9 303 243
- US-A- 5 242 604

## Description

This invention is an improvement to the invention relating to a self-sufficient station for washing motor vehicles, composed of transportable units, as described and claimed in Italian Patent No. 01,256,147 filed on 17 September 1992 in the name of the Company Swiss Wash S.r.l. belonging to the owner of the present patent application.

More precisely, the present invention relates to tanks, installed underneath parking bays of the said station or system for washing motor vehicles, housing means for storing both purified water and purification sludge, as well as means for treating the water used for washing, which in particular remove from the said water sand and similar coarse residue, sludge in the form of more or less fine particles and with a substantially colloidal consistency, lubricating oils and waxes, leaving a waste water which has already been treated sufficiently such that it may be purified completely in a water purifier of the commercial type, or else leaving, with the addition of a reverse-osmosis filter, completely purified water. More simply, the invention relates to a bay, to be installed in the ground and/or courtyards, containing only the abovementioned water treatment means. The means for storing purified water store water which is used to supply the service installations in the said bays of the washing systems, while the means for storing the purification sludge are intended to keep this sludge in a form which is as fully concentrated as possible pending removal thereof, for example, by means of a special drainage tanker.

The motor-vehicle washing systems of the type described in the abovementioned Italian Patent No. 01,256,147, when installed in zones where water supplies are scarce, must be able to recycle as far as possible the water used for washing motor vehicles and discharge, when necessary, water which is purified such that it has a minimum impact on the environment.

Since, when recycling the water used for washing motor vehicles, it often happens that the volume of the purified water supplied by a purifier installed in the assembly of the washing-water production plant exceeds the volume of water which may at the moment be used for washing, the need arises to store this purified water so that it may be used at the time when required. Moreover since any commercial purifier, during its function of purifying water already used for washing, produces purification sludge, which is classified as special industrial waste which cannot be disposed of in ordinary refuse dumps, but which requires special processing treatment which can be performed only in special treatment and disposal plants, the need arises to store this sludge as far as possible so that, as already mentioned, it may be removed and taken away to said plants.

The present invention is intended for this purpose and consists of tanks for treating washing water, as described in claim 1.

Preferably the speed of flow of the water is such as to cnsure laminar flow conditions in all of the said tanks.

In particular, the section for storing purified water receives purified water supplied from a purifier, combines it, where necessary, with water supplied from a water mains and finally conveys it to means for heating and adding detergents for use during washing of the motor vehicles.

In particular, moreover, the sludge storage section receives sludge from the water purification means, distributes it gradually and as uniformly as possible on its bottom, signals to the exterior the level reached by said sludge so as to indicate the need for drainage of the said section and transfers into a following water treatment section all the water which may be extracted from the sludge which is decanted and compacted in the said storage section.

Then, a first water treatment section receives water falling through a grating during the washing of vehicles parked in the bay and allows deposition, by means of decantation, firstly of the heavier and coarser materials such as grit, sand and metal particles and then of the sludge or silt, in flocculated form, such as the sludge produced by the reaction of the detergents used during washing with the oils, grease and bituminous substances which have accumulated on the bodywork and in the engine compartments of the washed motor vehicles.

Then a second water treatment section uses means, which are slightly raised from the bottom of the section, for slowing down the stream of water which passes through the said section so as to cause the adhesion of smaller and lighter particles of sludge to the walls of said slowing-down means, with the result that the particles of sludge fall onto the bottom of the section, while the light droplets of oil rise towards the surface of the water.

In particular, these slowing-down means consist of an assembly of immersed parallel plates which are arranged vertically in the same direction as the water stream, the distance between the plates being of the same order of magnitude as the thickness of the said plates.

Preferably, the plates of the assembly are undulated and arranged with the undulations substantially parallel.

The plates of the assembly must not be prone to deterioration by the water present in the sections, being made of stainless steels or plastics which are resistant to attack by the said water.

Preferably, the assembly of undulated plates is mounted on a frame which may be removed for periodic cleaning.

Then, a third water treatment section performs separation of the residue of free lubricating oils, causing it to float to the surface of an expanse of water present in a tank, using means for slowing down the stream of water, located underneath the surface of the water, so as to reduce the effect of entrainment of the oil droplets by the water and favour rising, to the surface, of the oil by means of floating.

Preferably, the means for slowing down the stream of water consist of an assembly of immersed undulated plates, arranged so as to be oriented horizontally and positioned above one another, where the peaks and the troughs of the undulations are arranged perpendicularly with respect to the direction of the water stream and the peaks of the undulations are provided with holes having the function of causing rising of the oil which accumulates underneath the said peaks of the undulated plates.

The plates of this assembly must also not be prone to deterioration by the water present in the sections, being made of stainless steel or plastics which are resistant to attack by the oil and the said water.

In addition, the oil which floats on the surface of the water in this section is retained in the same section by an immersed blocking baffle, extending from the surface of the water down to a certain depth, while a first discharge pipe kept level with the surface of the water by a float performs discharging of the oil separated from the water.

Then, the water which has passed through the immersed baffle concentrates its residual particles of oil, where present, in a zone confined between the said first immersed baffle and a second immersed baffle, the said zone being served by a second discharge pipe kept level with the surface of the water by a float so as to discharge the residual oil from the said confined zone.

In addition, in this confined zone, an ultrasound probe is used to upset the equilibrium between suspended microscopic particles which have accumulated between light droplets of oil or particles of wax and residual particles of sand and sludge which may be present in this zone, causing the particles to precipitate onto the bottom and the oil to rise to the surface.

In addition, moreover, it is possible to use a reverse-osmosis filter in order to filter definitively the water thus treated, transferring substantially pure water to a discharge outlet of the last treatment section.

Preferably, the reverse-osmosis filter comprises ceramic cartridges, which are resistant to attack by chemical products or deterioration by hydrocarbons and which may be regenerated by means of simple backwashing, the residue which has accumulated on them being discharged into the sludge storage section.

In addition, the water filtered by the reverse-osmosis filter may then be sterilised by physical or chemical means, such as germicide lamps or using ozone produced in an ozone generator, thereby becoming bacteriologically pure.

Obviously, both the sections for storing pure water or sludge and the sections for trcating the washing water are provided with manholes for access to the said sections so as to allow operations of maintenance, cleaning and periodic drainage of the said sections.

Obviously, moreover, the purification of the waste water by means of a reverse-osmosis filter is particularly preferred because it avoids the use of a commercial water purifier, with the consequent formation of large volumes of purification sludge, which sludge is simply reduced to that resulting from backwashing of the filters.

The features of the present invention will emerge from the claims forming the conclusive portion of this description.

However, other features and advantages will become evident from the following detailed description of an embodiment thereof with reference to the enclosed drawings, in which:
- Figure 1 is a plan view of a parking bay for washing motor vehicles of the type housing a means for storing purified water followed by means for removing sand, sludge and oil from washing water;
- Figure 2 is plan view of the same bay for washing motor vehicles according to Figure 1, with the floor covering removed, except for part of a grating for draining the washing water from vehicles;
- Figure 3 is a cross-sectional view of the same bay according to Figure 2, along a line 3-3 shown in Figure 2;
- Figure 4 is a cross-sectional view of the same bay according to Figure 2, along a line 4-4 shown in Figure 2;
- Figure 5 is a plan view of a bay for washing motor vehicles of the type housing a means for storing purification sludge followed by means for removing sand, sludge and oil from the washing water;
- Figure 6 is a plan view of the same bay for washing motor vehicles according to Figure 5, with the floor covering removed, except for part of a grating for draining the washing water from vehicles;
- Figure 7 is a cross-sectional view of the same bay according to Figure 6 along a line 7-7 shown in Figure 6;
- Figure 8 is a cross-sectional view of the same bay according to Figure 6, along a line 8-8 shown in Figure 6;
- Figure 9 is a plan view of a simplified bay, comprising only the sections for treating the washing water in order to eliminate the polluting substances, to be installed underground or partly underground in any location, such as residential courtyards, car-body workshops, repair workshops or similar areas, where the occasional washing of vehicles or equipment may be required;
- Figure 10 is a plan view of the same washing bay according to Figure 9, with the floor covering removed, except for part of a grating for draining the washing water from motor vehicles;
- Figure 11 is a cross-sectional view of the same bay according to Figure 10, along a line 11-11 shown in Figure 10;
- Figure 12 is a cross-sectional view of the same bay according to Figure 10, along a line 12-12 shown in Figure 10;
- Figure 13 is a general diagram of a system for washing motor vehicles, using three bays provided with water treatment tanks according to the invention, which illustrates the connections and the interactions between the tanks and a central service installation designed to provide washing water and, if necessary, purify completely the waste water from the purification tanks;
- Figure 14 is a plan view of a well for mixing purified water and mains water to be used in the washing system according to Figure 13;
- Figure 15 is a cross-sectional view of the same well, along a line 15-15 shown in Figure 14;
- Figure 16 is a plan view of a well for storing treated water to be transferred to the washing system according to Figure 13; and
- Figure 17 is a cross-sectional view of the same well, along a line 17-17 shown in Figure 16.

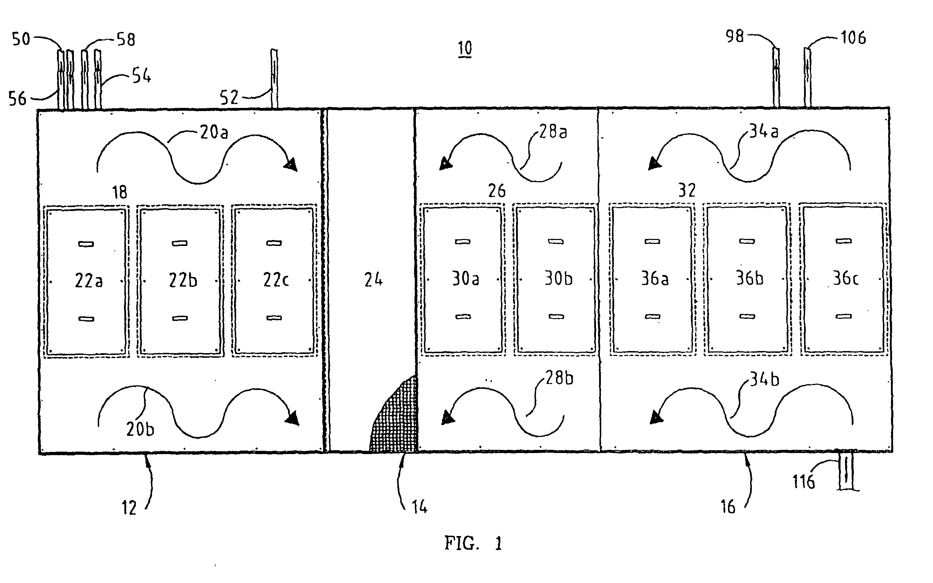

Let us consider first all Figures 1 to 4 which show a first type of bay which houses a tank for storing purified water, having, arranged alongside, tanks for treating water which is used for the washing of motor vehicles and which falls onto the ground within the said bay.

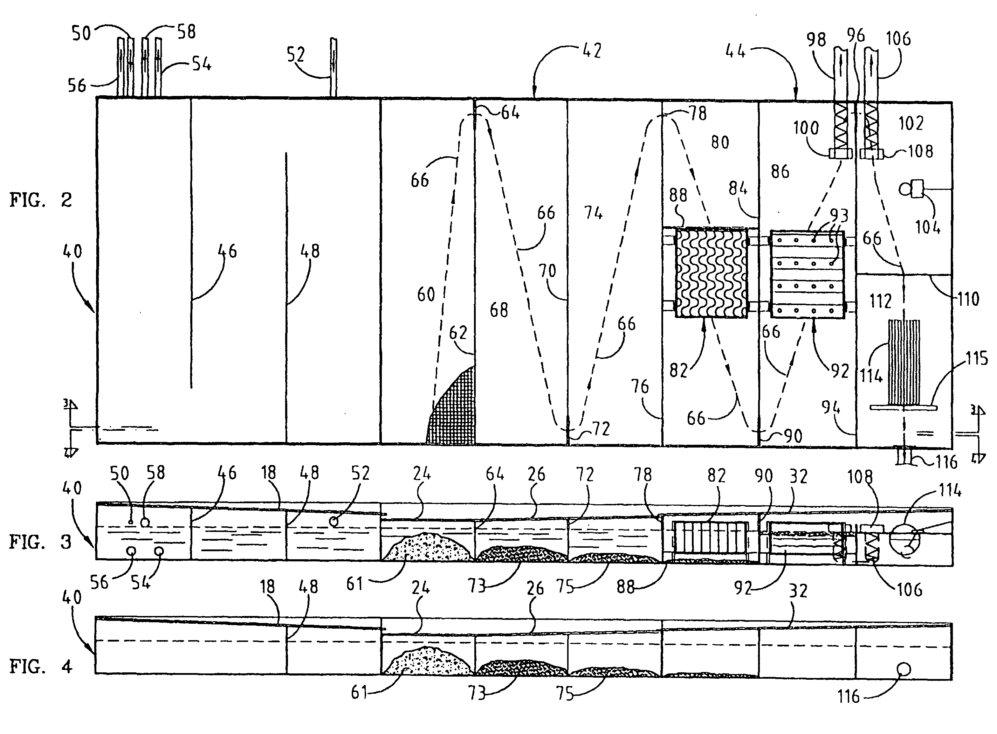

Looking at Figure 1, it can be seen that a first type of bay 10 is formed by a first floor zone 12 covering a purified-water storage tank, a second floor zone 14 covering a first tank for decantation sand and sludge or silt, and a third floor zone 16 covering, in a first area, a tank for eliminating the finer particles of sludge and, in a second area, a tank for separating oily residue and for discharging waste water. The first floor zone 12 comprises a surface 18 which is inclined so as to cause the washing water to flow as indicated by the arrows 20a and 20b and which has three manholes 22a, 22b and 22c allowing access to the purified-water storage tank 40 for maintenance, as can be seen in particular in Figures 2, 3 and 4 to which reference should be made. The second floor zone 14 comprises a grating 24, which has the function of collecting the washing water from all three floor zones 12, 14 and 16, and a surface 26, which is inclined towards the grating 24 so as to cause flowing of the said washing water as indicated by the arrows 28a and 28b and which has two manholes 30a and 30b allowing access for drainage, cleaning and maintenance of the tanks for deposition and decantation of sand and sludge. The third floor zone 16 comprises a surface 32 which is inclined towards the surface 26 so as to cause the washing water to flow as indicated by the arrows 34a and 34b and which has three manholes 36a, 36b and 36c allowing access for cleaning and maintenance of the sludge separation tank and the oily-residue separation and waste discharge tanks.

If we now consider Figures 1 to 4 it can be seen that the bay 10 is formed by three modular tanks 40, 42 and 44 housing a reserve supply of purified water, a section for separating sand and sludge and a section for separating oily residue and discharging purified water, respectively.

The tank 40 is basically divided into three compartments by two dividing baffles 46 and 48 and is served by a duct 50 for replenishing with water from an external water mains, a duct 52 for replenishing with water from an internal purifier; a duct 54 for drawing purified water intended for installations in the washing station, a bottom discharge outlet 56 for completely emptying the tank 40 and an overflow duct 58 for preventing the maximum level of water inside the said tank from being exceeded. Obviously, the tank 40 serves merely as a reserve store for purified water and, consequently, may not have any direct connection with the other tanks 42 and 44 which collect and treat falling water resulting from the washing of motor vehicles.

The tank 42 for separating the sand and washing sludge, by means of decantation from a suitably slowed-down stream of water, comprises a first section 60 which is covered by the grating 24 and inside which a mass 61 of coarser particles of sand is collected, said section being bounded by a wall 62 which terminates in a spillway 64 which moderates the speed of the water and allows only the upper portion of a stream of water 66 to flow out of the section 60. The stream of water 66 then passes into a second tank section 68 which is defined between the preceding wall 62 and a following wall 70 and where a following spillway 72 allows only the upper portion of the stream of water 66 to flow out, keeping the water at a particularly low speed which favours further decantation of a mass 73 of increasingly finer and lighter particles of sand and washing sludge. The same stream of water 66 then passes into a third tank section 74, defined between the wall 70 and a wall 76, where it deposits, by means of decantation, a mass 75 of even finer and lighter particles 75. Then the stream 66 passes through a following spillway 78, which allows only the upper portion thereof to pass through, and enters into a first section 80 of the next tank 44 performing definitive separation of lighter and finer particles of sludge by means of the principle of adhesion of the said particles to a plurality of undulated plates of a plate assembly 83 installed between the wall 76, dividing the two tanks 42 and 44, and a following wall 84 dividing the first section 80 from a second section 86. A baffle 88 is positioned in front of the plate assembly 82 and forces all the water to pass through the plate assembly 82.

The operating principle of the plate assembly 82 is particularly simple and effective. Since the speed of the stream of water 66 is kept low to the point where the water may be regarded as moving in a laminar flow condition, this means that, in each space separating the plates of the assembly 82, the speed of the water wetting the plates - which are constructed so as to be easily wettable, for example being made of stainless steel with a fine grained finish, or more cheaply, but more effectively, being made of plastic substances which are resistant to attack by chemical substances present in the water - is practically zero at the interface with the surface of the said plates so that any finer particles coming into contact with the plates would end up adhering thereto. This would result in the extraction of particles from the water and the particles thus extracted from the water and adhering to the plates of the plate assembly 82 would form an increasingly effective barrier for other particles in the water, which would be stopped with increasing ease. However, in order to prevent complete blockage of the plate assembly 82, it is necessary to remove periodically the particles deposited in the said assembly 82 by means of simple washing thereof using, for example, a jet of pressurised water, even though in normal working conditions any materials which have become "attached" to the plate surfaces, since they are increasing in size, if heavier than the water, would fall to the bottom and, if lighter, would float, leaving the assembly, which is raised with respect to the bottom of the tank, substantially free and clean.

The stream of water 66 flows out from the first section 80 via a spillway 90, entering into the section 86 which acts as a first section for separating oil, more particularly separating oily residue from the mass of water which is performed using the floating effect of the same oily residue. For this purpose, the section 86 has, installed in it, a plate assembly 92, which is formed, in a similar manner to the plate assembly 82 already mentioned, by undulated plates made of stainless steel or even better of plastic materials of the same kind as those of the plate assembly 82, and the plates of which, however, are arranged horizontally with the peaks and the troughs of their undulations being arranged perpendicular to the direction of the stream of water 66 which passes through the section 86, said peaks being provided with holes 93 for allowing the oil trapped underneath the plates of the plate assembly 92 to rise to the surface. The operating principle of the plate assembly 92 is similar to that of the plate assembly 82 since it again involves, as happens in a laminar flow condition, attaining a substantially zero speed at the interface between the water and the plates of the plate assembly 92, although, in this case, the zero speed favours rising, as a result of floating, of the oil inside the peaks of the undulations in the plates where it accumulates and from where it flows out through the holes 93 so as to reach the surface of the water inside the section 86. This section 86 is defined between the wall 84 and a following wall 94 and terminates in an immersed baffle outlet 96 which basically blocks all the floating oil present in the section 86 from where it is removed by a discharge pipe 98 which is kept at the height of the water surface by a float 100,

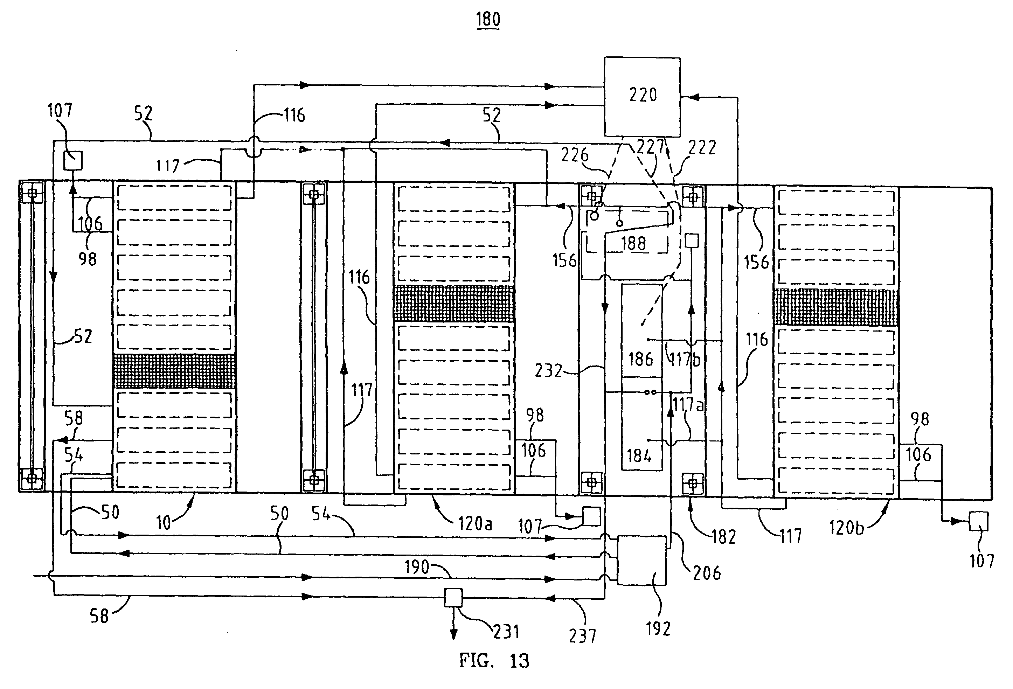

The stream of water 66, emerging from underneath the immersed spillway 96, enters into a penultimate section 102 of the tank 44 inside which the last oil residue which may have overcome the immersed baffle 96 surfaces. An ultrasound generator 104 detaches any oil which may have adhered to heavy particles of sand and/or sludge, or silt, causing it to surface on the water, while the heavy particles fall onto the bottom. The oil on the surface of the water is removed by a discharge pipe 106 which is kept at the height of the water surface by a float 108. The stream of water 66 then passes over a second immersed baffle 110, entering into a last section 112 which contains a reverse-osmosis filter 114 of the ceramic type and which may therefore be regenerated using simple methods, such as backwashing, heating, or both. and which is able to block any remaining hydrocarbons or similar substances which may be present at the end of treatment of the water inside the tanks 42 and 44. The filter 114 then discharges the water, which is now purified, into a discharge pipe 116 so as to transfer it, after any treatment using germicide means 115, such as lamps or ozone generators, directly or indirectly, to the storage tank 40 or to the sewage discharge outlet. Alternatively, if the reverse-osmosis filter were not present. for example being already present, for example, in the plant of a purifier outside the tanks, the discharge pipe 116 would be connected to a water storage well 220 which would send this water to the said purifier, as will be illustrated in detail hereinbelow in Figures 13, 16 and 17.

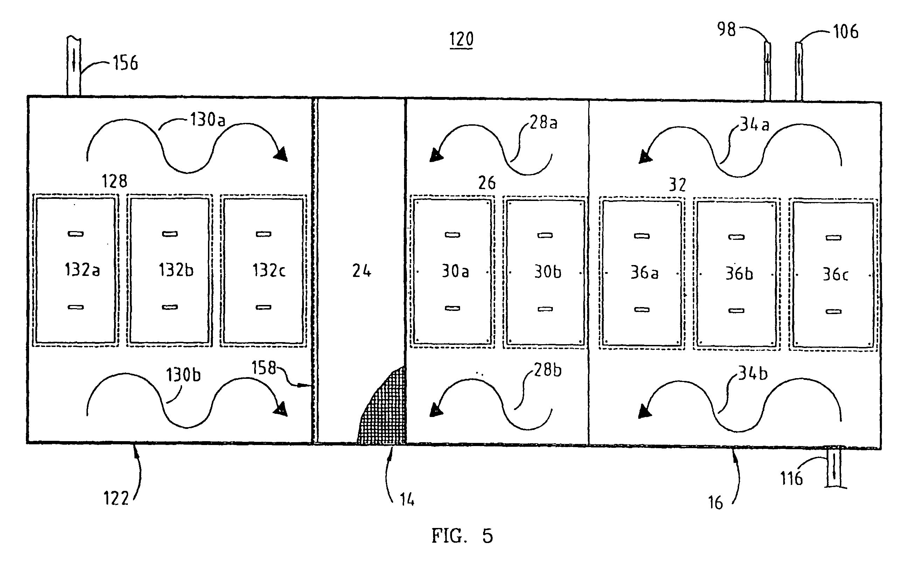

Let us now consider Figures 5 to 8 which show a second type of bay 120 which houses a tank for storing purification sludge, with, arranged alongside, tanks for treating water which is used during the washing of motor vehicles and which falls onto the ground of the said bay. In these Figures 5 to 8, elements which are identical or similar to those shown in Figures 1 to 4 will be indicated by the same reference numbers.

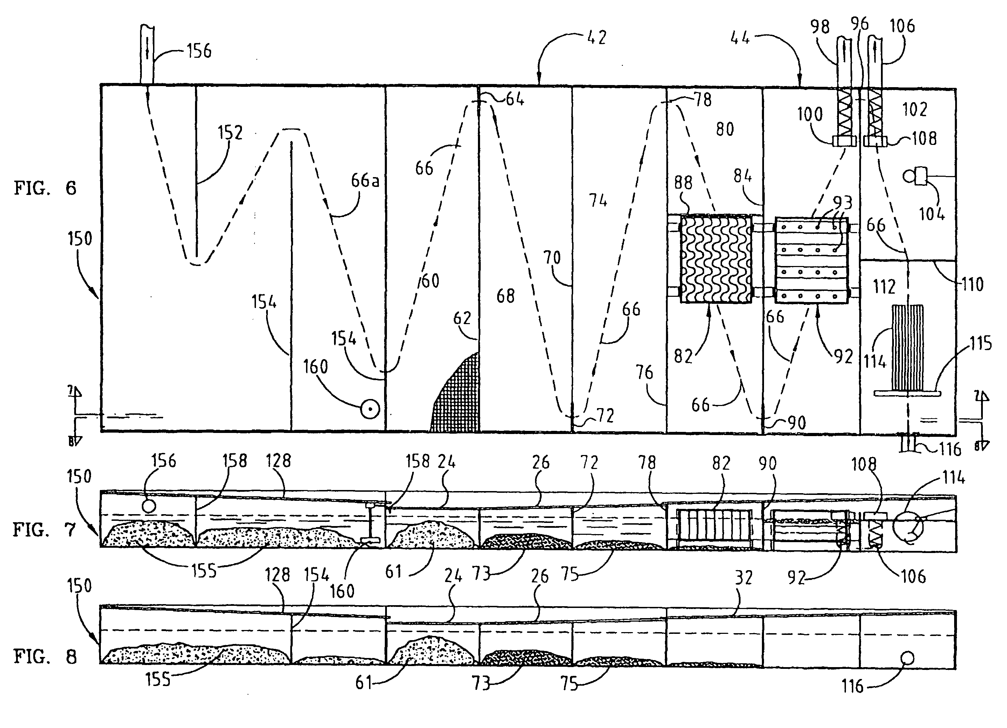

Looking at Figure 5. it can be seen that a second type of bay 120 is formed by a first floor zone 122 covering a tank for storing purification sludge, a second floor zone 14 covering a first tank for decantation sand and sludge, and a third floor zone 16 covering, in a first area, a tank for eliminating the finer particles of sludge or silt and, in a second area, a tank for separating oily residue and discharging waste water. The first floor zone 122 comprises a surface 128 which is inclined so as to cause the washing water to flow as indicated by the arrows 130a and 130b and which has three manholes 132a, 132b and 132c allowing access, for maintenance purposes, to a tank for storing purification sludge which can be seen in particular in Figures 6, 7 and 8, to which reference should be made. The second floor zone 14 comprises a grating 24, which has the function of collecting the washing water from all three floor zones 122. 14 and 16, and a surface 26 which is inclined towards the grating 24 so as to cause the said washing water to flow as indicated by the arrows 28a and 28b and which has two manholes 30a and 30b allowing access for drainage, cleaning and maintenance of the tanks for deposition and decantation of sand and sludge. The third floor zone 16 comprises a surface 32 which is inclined towards the surface 26 so as to cause the washing water to flow as indicated by the arrows 34a and 34b and which has three manholes 36a, 36b and 36c allowing access for cleaning and maintenance of the sludge separation tank and the tanks for separation of the oily residue and discharging waste.

If we now consider Figures 5 to 8, it can be seen that the bay 120 is formed by three modular tanks 150, 42 and 44 which house a mass of purification sludge, a section for separating sand and sludge, and a section for separating oily residue and for discharging treated or purified water, respectively.

The tank 150 is basically divided into three compartments by two dividing baffles 152 and 154 which help deposition of the sludge 155 supplied by a discharge duct 156 of a water purifier so that it gradually occupies the whole tank 150 in the most uniform and complete manner possible. The sludge 155, having entered via the duct 156, is deposited onto the floor of the tank, releasing a certain quantity of water which is destined for the same treatment as the water used for washing the motor vehicles. For this purpose the right-hand wall of the tank 150 is provided with a spillway opening 158 which allows the water released by the sludge to flow out and enter into the next tank 42. The tank 150 also has a sensor 160 which is capable of signalling the level of the sludge 155 inside the said tank so as to request in time the intervention of a drainage tanker for removal of the said sludge.

The remainder of the tanks 42 and 44 are composed and operate in an identical manner to the tanks 42 and 44 already described with reference to Figures 2 to 4. to which reference should be made.

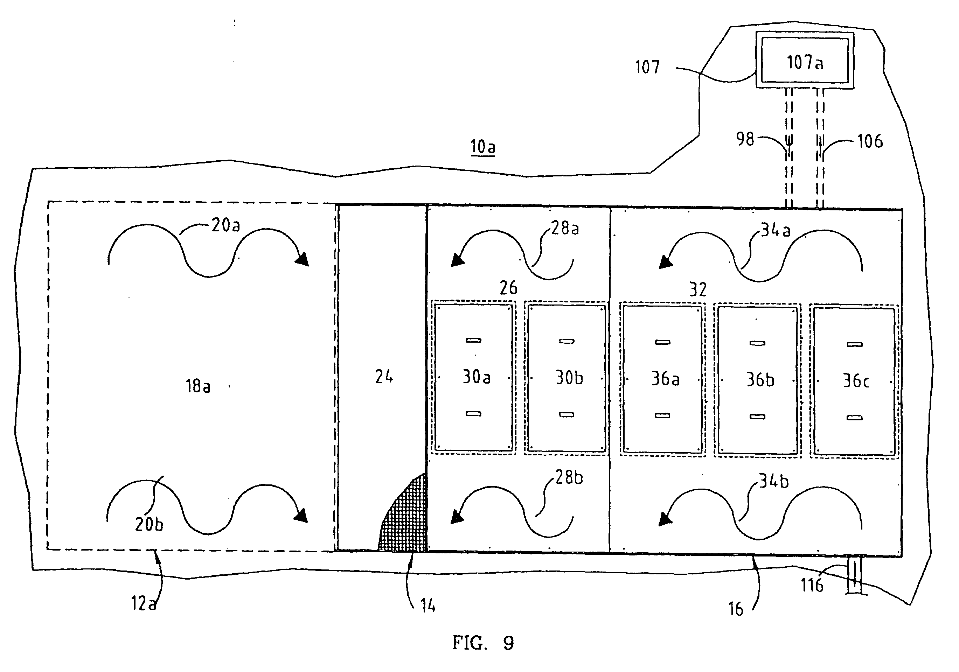

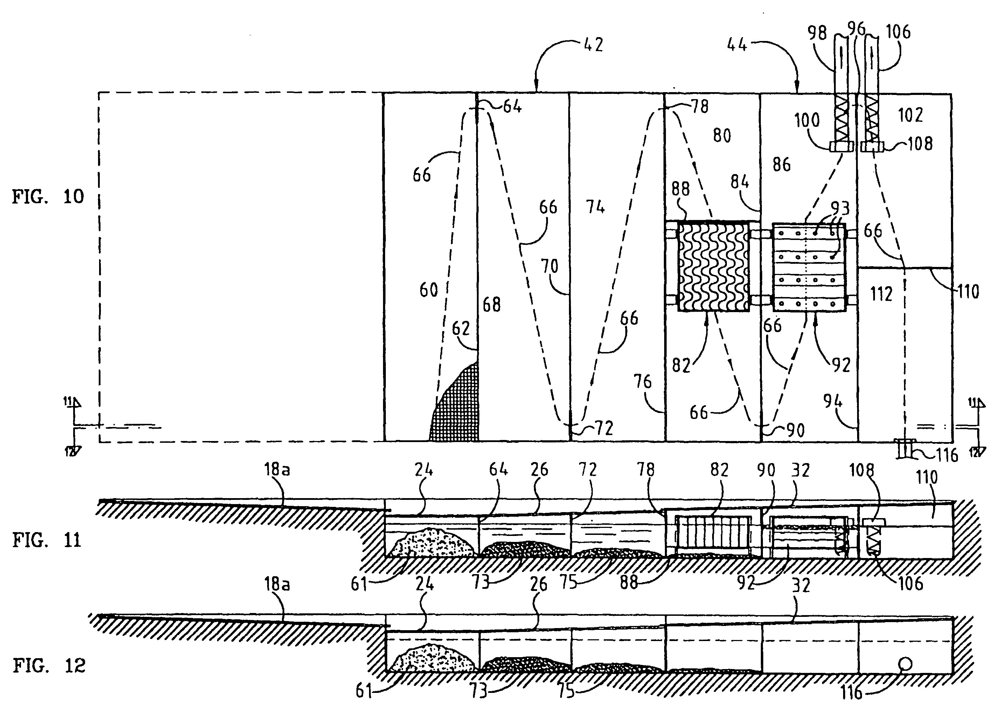

Let us now consider Figures 9 to 12 which illustrate a simplified bay 10a operating as a passive plant for treating washing water, performing the removal of sand, sludge and oil therefrom, so as to allow discharging thereof into the municipal sewage system.

This simplified bay 10a is similar to the bay 10 depicted in Figures 1 to 4, except that it does not have the floor zone 12 formed by the inclined surface 18 and the tank 40 for storing purified water, which are replaced respectively by a floor zone 12a formed by a simple inclined surface 18a which is constructed as a simple slab on the ground. The remainder of the tanks 42 and 44 is identical to the tanks 42 and 44 of the bay 10, except that the penultimate section 102 of the tank does not have the ultrasound generator 104 and the last section 112 of the said tank does not have the reverse-osmosis filter 114 and the germicide means 115 so as to avoid any component which is active or needs regeneration as is the case, respectively, with the ultrasound generator 104, the reverse-osmosis filter 114 and the germicide means 115. The tank 44 is simply provided with discharge outlets 98 and 106 for the oil, which are connected to a storage well 107 provided with an access manhole 107a, and with a discharge outlet 116 for the waste water to be conveyed directly into the municipal sewage system. The grating 24 and the manholes 30a, 30b, 36a, 36b and 36e present on the respective floor zones 14 and 16 have the same function described for the bay 10 according to Figures 1 to 4.

Looking at Figure 13, which shows for example the general layout of a washing plant for motor vehicles using three bays 10, 120a and 120b provided with purification tanks according to the invention and considering that each washing plant of this type with a number of bays different from that illustrated here is substantially equivalent, it can be seen that a washing plant 180 comprises a so-called "technological module" 182 which may be similar to the technological module or plant assembly illustrated in Figure 6 of the abovementioned Italian Patent No. 01,256,147, comprising a reverse-osmosis water softener 184, a washing machine 186 comprising a water-heating boiler and detergent metering/mixing devices capable of supplying water and, for example, washing spray guns which are present above each of the bays 10, 120a and 120b and, if necessary, a commercially available water purifier 188, such as the known powder purifiers, having the function of purifying the treated water discharged from the three bays 10, 120a and 120b by means of the ducts 116 and conveying it to the reserve tank 40 for purified water which is present in the bay 10 via the pipe 52. Obviously the water purifier 188, if of the powder type, produces sludge which is conveyed via a double duct 156 to the sludge storage tanks present in the bays 120a and 120b.

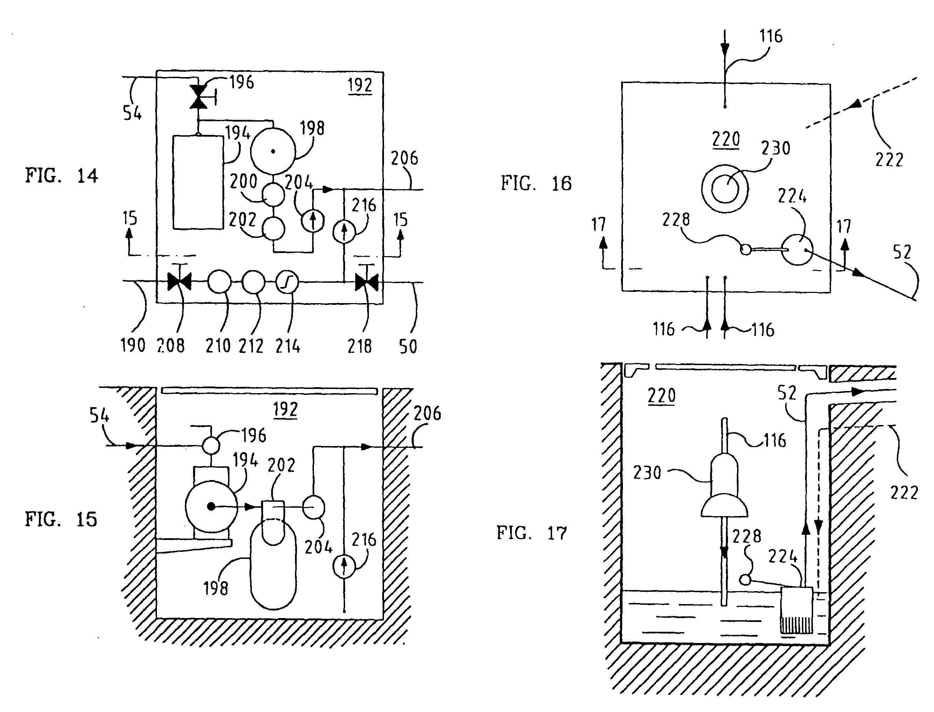

This plant 180, in addition to recycling as far as possible the purified water which is retained inside the tank 40 of the bay 10, automatically draws water from an external water mains 190 when it is noticed that there is an excessive reduction in purified water in the plant, for example owing to an excessive reduction in the water pressure inside the apparatus of the technological module 182, such as the water softener 184 and the washing machine 186. For this purpose, a well 192 contains the necessary equipment, depicted in detail in Figures 14 and 15, for recirculating and automatically replenishing purified water and mains water. In particular, the well 192 contains a pump 194 which draws, via a manually operated valve 196, water supplied, via a duct 54, from the purified-water storage tank 40 illustrated in Figures 2 to 4 and conveys it to a pressure compensation tank 198. The water leaving the tank 198 then passes through a filter 200 able to block very fine particles, such as a filter with openings of 20 µm, an anti-limescale filter 202 and a non-return valve 204 to a pipe 206 supplying the technological module 182 where it supplies water to the softener 184 and, possibly, to the purifier 188. The water mains 190 also has an inlet into the well 192 and, via a manually operated valve 208, a filter 210 able to block very fine particles, such as a filter with openings of 90 µm, an anti-limescale filter 212 and an optional pressure regulator 214, if necessary, reaches a non-return valve 216 for introducing mains water into the pipe 206 should the water pressure in the technological module 182 fall below a value fixed by the regulator 214. A manual valve 218 S allows the water of the water mains 190 to be sent directly to the duct 50 for replenishing the tank 40 for the reserve supply of purified water should the level of the water inside the tank 40 decrease excessively.

As can be seen in Figures 16 and 17, the treated and purified waste water supplied via the ducts 116 from the tanks 44 of the bays 10, 120a and 120b flows into a waste water storage well 220 from where a raising pump 224 conveys it to the duct 52 for supplying the tank 40 storing purified water. A float device 228 periodically operates the pump 224 each time the level of the waste water in the well 220 exceeds a predetermined height. In order to disinfect the water, if germicide means 115 are not provided in the last sections 112 of the tanks 44, it is possible to provide, inside the well 220, a germicide lamp 230 which irradiates ultraviolet rays onto the mass of water present in the well 220. Alternatively, if the technological module 182 should envisage a water purifier 188, treated water discharged from tanks 44, devoid of reverse-osmosis filters 114 and germicide means 115, would be sent, again via the ducts 116, to the well 220 and from here the pump 224 would send it via an alternative duct 226 to the purifier 188 from where it would emerge purified via a duct 227 connected to the duct 52 for supplying the tank 40 storing purified water.

Obviously, should purification of the water be completed inside the tanks 44 with the intervention of the reverse-osmosis purifiers 114, the problem, which would arise, would be that of disposing of filter backwashing sludge which, being special waste, would have to be stored in at least one tank 150 from where it would be periodically removed. For this purpose ducts 117 which could convey this sludge Into the storage tank 150 would have an effective function. At least one of the ducts 117 could have, associated with it, ducts 117a and 117b for discharging backwashing sludge from the water softener 184 and, if necessary, from the washing machine 186.

Any excess quantity of water which is of an environmentally acceptable quality may be discharged into a sewerage well 231 into which there flows: the water from the overflow duct 58 of the purified-water storage tank and any excess quantity of purified or softened water supplied, via a duct 232, from the technological module 182.

The oil separated from the water treated in the tanks 44, which flows out via the ducts 98 and 106, is collected in wells 107 from where it may be extracted by opening a tap and causing it to flow into a central reservoir which, in view of the quantities of oil treated, may be a simple bucket or jerry can, from where it may be removed manually for transfer to disposal plants when other drainage operations are carried out. Moreover, in an even simpler case, it is possible to even dispense with the oil discharge pipes 98 and 106 provided with the respective floats 100 and 108, by envisaging using the upper space of the oil extraction sections 86 and 102 as volumes for collecting oil which depend on the depth of the two immersed spillways 96 and 110 and may reach values of about 1 cubic metre, so that removal of the oil becomes an operation which must be performed very rarely, for example once a year, during maintenance and overhaul of the plant. This discharge operation may be performed simply by means of ducts provided with taps positioned at heights which allow drainage of substantially all the oil present.

The above description illustrates only a particular embodiment of the present invention, in connection with which a person skilled in this technical sector may, from a reading of the above description, devise logical changes and variations which are to be regarded as all covered by the claims which form the conclusive part of the present description. For example, the number of bays containing the tanks with the reserve supplies of purified water may be different from one, as shown here, a number greater than one being equally possible. The number of bays containing the sludge storage tanks may be less than two in the case where all the reverse-osmosis filters are used because the purification sludge, produced in this case, would be of a smaller quantity compared to that which is produced when using a water purifier 188 (Figure 13) of the powder or liquid-reagent type, so that a single sludge storage tank could be more than sufficient, with the tanks of the other bays being used for storing purified water,

## Claims

1. Tanks for treating water used for washing motor vehicles parked in parking bays (10, 10a, 120) comprising at least two sections a first one of which (42) serves as a section for treating water by means of decantation both of sand and other coarse residue and of fine sludge, and a second one of which (44) serves as a treatment section for separating lubricating oils from the mass of water used for washing motor vehicles and for separate discharging of the lubricating oils and the treated water, wherein the first section (42) for treating the water receives falling water from the washing of motor vehicles parked in a parking bay (10) via a grating (24) and allows deposition, by means of decantation or settling, firstly of the heavier and coarser materials, such as grit, sand and metal particles and then of the sludge in flocculated form, such as sludge resulting from the reaction of the detergents, used during washing, with the oils, grease and bituminous substances which have accumulated on the bodywork and in the engine compartments of the washed motor vehicles, **characterized in that** the second water treatment section (44) uses means (82) for restricting the stream of water (66) which flows through the said section so as to cause adhesion of the smaller and lighter particles of sludge to the walls of the said restricting means (82), which means (82) consist of an assembly of parallel plates vertically arranged in the same direction as the stream of water (66), the distance between the plates being of the same order of magnitude as the thickness of the said plates.

2. Tanks according to claim 1, **characterized in that** the plates of the assembly (82) are undulated and arranged with the undulations substantially parallel.

3. Tanks according to claim 2, **characterized in that** the plates of the assembly (82) are made of materials resistant to the chemical agents present in the water.

4. Tanks according to claim 3, **characterized in that** the plates of the assembly of undulated plates (82) is mounted on a frame which can be removed for the purposes of periodic cleaning.

5. Tanks according to the preceding claims, **characterized in that** the second water treatment section (44) further performs separation of the residue of free lubricating oils, causing it to float on the surface of an expanse of water present in a tank (44), using means (92) for restricting the stream of water so as to reduce the effect of entraining oil droplets by the water and favour rising, to the surface, of the oil by means of floating, which means (92) for restricting the stream of wafer consist of an assembly of undulated plates arranged so as to be oriented horizontally and positioned above one another, where peaks and troughs of the undulations are arranged perpendicularly with respect to the direction of the water stream and the peaks and undulations are provided with holes (93) having the function of causing rising of the oil which accumulates underneath the said peaks of the undulated plates.

6. Tanks according to claim 5, **characterized in that** the plates of the assembly (92) are made of material resistant to the chemical agents present in the water.

7. Tanks according to claims 5 and 6, **characterized in that** the oil which is made to float on the surface of the water in this section is retained in the same section by an immersed blocking baffle (96), extending from the surface of the water down to a certain depth, while a first discharge pipe (98), kept level with the surface of the water by a float (100), performs discharging of the oil separated from the water.

8. Tanks according to claim 7, **characterized in that** the water which has passed through the immersed baffle (96) concentrates its residual particles of oil, where present, in a section (102) confined between the said first immersed baffle (96) and a second immersed baffle (110), the said section being served by a second discharge pipe (106) kept level with the surface of the water by a float (108) so as to discharge the residual oil from the said confined section (102).

9. Tanks for treating water used for washing motor vehicles and equipment, parked in parking bays (10, 120), according to preceding claims, comprising an additional section (40, 150), which serves as means (40) for storing purified water or means (150) for storing residual purification sludge, **characterized in that** the section (40) for storing purified water receives via a first pipe (52) purified water from a purifier (188), combines it, where necessary, with water supplied, via a second pipe (50), from a water mains and finally conveys it to means (186) for heating and adding detergents for use during washing of the motor vehicles, and the sludge storage section (150) receives sludge (155) from the water purifier (188), distributes it gradually, and as uniformly as possible, on its bottom, signals to the exterior, by means of a sensor (160), the level reached by said sludge (155) so as to indicate the need of drainage of the said section (150) and transfers into the following treatment section (42), via a pouring means, such as a spillway (158), all the water which may be extracted from the sludge (155) which is decanted and compacted in the said storage section (150).

10. Tanks according to claim 8, **characterized in that**, in this confined section (102), an ultrasound probe (104) is used to promote separation of oil droplets from residual particles of sludge which may be present in this area, causing the particles to precipitate onto the bottom and the oil to rise to the surface.

11. Tanks according to claim 10, **characterized in that** a reverse-osmosis filter (114) is used to filter definitively the water thus treated, conveying it to a discharge outlet (116) of the last section for treating water which requires only a final treatment in a purifier (188) of the commercial type in order to eliminate any detergent residue, obtaining chemically pure water.

12. Tanks according to claim 11, **characterized in that** the reverse-osmosis filter (114) comprises ceramic cartridges, which are resistant to attack by chemical products or deterioration by hydrocarbons and which can be regenerated by means of simple back-washing, the residue which has been accumulated in them being discharged into the sludge storage section (150).

13. Tanks according to claims 9 to 10, **characterized in that** the water filtered by the reverse-osmosis filter (114) may then be sterilised by physical means (115), such as germicide lamps.

14. Tanks according to claims 9 to 10, charecterized in that the water filtered by the reverse-osmosis filter (114) may then be sterilised by chemical means, for example using either halogens or ozone.

15. Tanks according to claims 9 to 14 **characterized in that** both the sections for storing pure water or sludge (40, 150) and the sections (42, 44) for treating the washing water are provided with manholes (22a-c, 132a-c; 30a, 30b; 36a-c) for access to the said sections so as to allow operations of maintenance, cleaning and periodic drainage of the said sections.

## Patentansprüche

1. Behälter zur Behandlung von Wasser, das zum Waschen von in Parkbuchten (10, 10a, 120) geparkten Kraftfahrzeugen verwendet wurde, mit zumindest zwei Abschnitten, von denen ein erster (42) als Abschnitt zur Behandlung von Wasser mit Hilfe von Dekantierung sowohl von Sand als auch anderen groben Resten und von feinem Schlamm dient, und ein zweiter (44) als Behandlungsabschnitt zur Trennung von Schmierölen von der Wassermasse dient, die zum Waschen von Kraftfahrzeugen verwendet wurde, und zur getrennten Abgabe der Schmieröle des behandelten Wassers, wobei der erste Abschnitt (42) zur Behandlung des Wassers fallendes Wasser von dem Waschen von in einer Parkbucht (10) geparkten Kraftfahrzeugen über ein Gitter (24) empfängt, und eine Ablagerung, mit Hilfe von Dekantieren oder Absetzen zuerst der schwereren und gröberen Materialien ermöglicht, beispielsweise Kies, Sand und Metallteilchen und dann des Schlamms in ausgeflockter Form, beispielsweise Schlamm, der sich infolge der Reaktion der beim Waschen verwendeten Waschmittel mit den Ölen, Schmierstoff und betuminösen Substanzen ergibt, die sich auf der Karosserie und dem Motorabteilen der gewaschenen Kraftfahrzeuge angesammelt haben, **dadurch gekennzeichnet, dass** der zweite Wasserbehandlungsabschnitt (44) eine Vorrichtung (82) zum Drosseln des Stroms des Wassers (66) einsetzt, das durch den Abschnitt fließt, um ein Anhaften der kleineren und leichteren Teilchen des Schlamms an den Wänden der Drosselvorrichtung (82) hervorzurufen, wobei die Vorrichtung (82) aus einer Anordnung aus parallelen Platten besteht, die vertikal in derselben Richtung wie der Strom des Wassers (66) angeordnet sind, und die Entfernung zwischen den Platten in derselben Größenordnung liegt wie die Dicke der Platten.

2. Behälter nach Anspruch 1, **dadurch gekennzeichnet, dass** die Platten der Anordnung (82) wellförmig und mit den Welligkeiten im Wesentlichen parallel angeordnet sind.

3. Behälter nach Anspruch 2, **dadurch gekennzeichnet, dass** die Platten der Anordnung (82) aus Materialien bestehen, die beständig gegen die in dem Wasser vorhandenen chemischen Mittel sind.

4. Behälter nach Anspruch 3, **dadurch gekennzeichnet, dass** die Platten der Anordnung aus gewellten Platten (82) auf einem Gestell angeordnet sind, das zum Zwecke der periodischen Reinigung entfernt werden kann.

5. Behälter nach den voranstehenden Ansprüchen, **dadurch gekennzeichnet, dass** der zweite Wasserbehandlungsabschnitt (44) weiterhin eine Trennung des Restes freier Schmieröle durchführt, und ihn auf der Oberfläche eines weiten Raums von Wasser schwimmen lässt, das in einem Behälter (44) vorhanden ist, unter Verwendung einer Vorrichtung (92) zum Drosseln des Stroms des Wassers, um den Effekt des Mitreißens von Öltropfen durch das Wasser zu verringern, und ein Ansteigen des Öls an die Oberfläche mit Hilfe des Schwimmens zu fördern, wobei die Vorrichtung (92) zum Drosseln des Wassers aus einer Anordnung aus gewellten Platten besteht, die so angeordnet sind, dass sie horizontal ausgerichtet und übereinander angeordnet sind, wobei Höhen und Täler der Welligkeiten senkrecht in Bezug auf die Richtung des Wasserstroms angeordnet sind, und die Höhen und Welligkeiten mit Löchern (93) versehen sind, welche die Aufgabe haben, einen Anstieg des Öls zu veranlassen, das sich unterhalb der Höhen der gewellten Platten ansammelt.

6. Behälter nach Anspruch 5, **dadurch gekennzeichnet, dass** die Platten der Anordnung (92) aus einem Material bestehen, das beständig gegen die chemischen Mittel ist, die in dem Wasser vorhanden sind.

7. Behälter nach Anspruch 5 und 6, **dadurch gekennzeichnet, dass** das Öl, das in diesem Abschnitt zum Schwimmen auf der Oberfläche des Wassers veranlasst wird, in demselben Abschnitt durch ein eingetauchtes Sperrbaffle (96) festgehalten wird, das sich von der Oberfläche des Wassers bis in eine bestimmte Tiefe herunter erstreckt, während ein erstes Ablassrohr (98), das auf dem Niveau des Wassers durch einen Schwimmkörper (100) gehalten wird, das Ablassen des von dem Wasser getrennten Öls durchführt.

8. Behälter nach Anspruch 7, **dadurch gekennzeichnet, dass** das Wasser, das durch das eingetauchte Baffle (96) hindurchgelangt ist, seine Restteilchen an Öl konzentriert, soweit vorhanden, in einem Abschnitt (102), der zwischen dem ersten eingetauchten Baffle (96) und einem zweiten eingetauchten Baffle (110) begrenzt ist, wobei der Abschnitt von einem zweiten Auslassrohr (106) versorgt wird, das auf dem Niveau der Oberfläche des Wassers durch einen Schwimmkörper (108) gehalten wird, um das restliche Öl von dem eingeschränkten Abschnitt (102) abzulassen.

9. Behälter zur Behandlung von Wasser, das zum Waschen von Kraftfahrzeugen und Geräten verwendet wurde, die in Parkbuchten (110, 120) geparkt sind, nach voranstehenden Ansprüchen, mit einem zusätzlichen Abschnitt (40, 150), der als Vorrichtung (40) zum Aufbewahren gereinigten Wassers dient, oder als Vorrichtung (150) zum Aufbewahren restlichen Reinigungsschlamms, **dadurch gekennzeichnet, dass** der Abschnitt (40) zum Aufbewahren gereinigten Wassers über ein erstes Rohr (52) gereinigtes Wasser von einer Reinigungsvorrichtung (188) empfängt, dieses, soweit erforderlich, mit Wasser vereinigt, das über ein zweites Rohr (50) von einer Wasserhauptleitung geliefert wird, und es schließlich zu einer Vorrichtung (186) zum Erwärmen und Hinzufügen von Waschmitteln zum Einsatz beim Waschen der Kraftfahrzeuge transportiert, wobei der Schlammspeicherabschnitt (150) Schlamm (155) von der Wasserreinigungsvorrichtung (188) empfängt, diesen allmählich und so gleichförmig wie möglich auf seinem Boden verteilt, nach Außen hin mit Hilfe eines Sensors (160) das Niveau mitteilt, das von dem Schlamm (155) erreicht wurde, um so das Erfordernis anzuzeigen, den Abschnitt (150) zu entleeren, und in dem folgenden Behandlungsabschnitt (92) über eine Gießvorrichtung, beispielsweise einen Überlauf (158), das gesamte Wasser überträgt, das von dem Schlamm (155) abgezogen wurde, der in dem Speicherabschnitt (150) dekantiert und verdichtet wird.

10. Behälter nach Anspruch 8, **dadurch gekennzeichnet, dass** in dem eingeschränkten Abschnitt (102) eine Ultraschallsonde (104) dazu eingesetzt wird, die Trennung von Öltropfen von Restteilchen von Schlamm zu fördern, die in diesem Bereich vorhanden sein können, wodurch die Teilchen dazu veranlasst werden, sich auf dem Boden niederzuschlagen, und das Öl zum Anstieg an die Oberfläche veranlasst wird.

11. Behälter nach Anspruch 10, **dadurch gekennzeichnet, dass** ein Umkehrosmosefilter (114) dazu eingesetzt wird, präzise das so behandelte Wasser zu filtern, es zu einem Abgabeauslass (116) des letzten Abschnitts zur Behandlung von Wasser transportiert, welches nur eine endgültige Reinigung in einer Reinigungsvorrichtung (188) von handelsüblicher Art benötigt, um irgendwelche Waschmittelreste auszuschalten, wodurch chemisch reines Wasser erhalten wird.

12. Behälter nach Anspruch 11, **dadurch gekennzeichnet, dass** das Umkehrosmosefilter (114) Keramikkartuschen aufweist, die beständig gegen Angriffe durch chemische Erzeugnisse oder gegen Beeinträchtigungen durch Kohlenwasserstoffe sind, und die mit Hilfe einer einfachen Rückspülung regeneriert werden können, wobei der Rest, der sich in ihnen angesammelt hat, in den Schlammspeicherabschnitt (150) abgegeben wird.

13. Behälter nach Anspruch 9 bis 10, **dadurch gekennzeichnet, dass** das Wasser, das durch das Umkehrosmosefilter (114) gefiltert wurde, dann durch eine physikalische Vorrichtung (115) sterilisiert werden kann, beispielsweise keimtötende Leuchten.

14. Behälter nach Ansprüchen 9 bis 10, **dadurch gekennzeichnet, dass** das durch das Umkehrosmosefilter (114) gefilterte Wasser dann durch eine chemische Vorrichtung sterilisiert werden kann, beispielsweise unter Verwendung entweder von Halogenen oder Ozon.

15. Behälter nach Ansprüchen 9 bis 14, **dadurch gekennzeichnet, dass** sowohl die Abschnitte zum Aufbewahren von reinem Wasser oder Schlamm (40, 150) als auch die Abschnitte (42, 44) zur Behandlung des Waschwassers mit Mannlöchern (22a-c, 132a-c; 30a, 30b; 36a-c) für Zugang auf die Abschnitt versehen sind, um die Vorgänge der Wartung, der Reinigung und der periodischen Leerung der Abschnitte zu ermöglichen.

## Revendications

1. Cuves pour traiter de l'eau utilisée pour laver les véhicules à moteur garés dans des places de stationnement (10, 10a, 120), comprenant au moins deux sections dont une première (42) sert de section destinée à traiter l'eau par décantation à la fois du sable, d'autres résidus grossiers et de la boue fine, dont une deuxième (44) sert de section de traitement destinée à séparer les huiles lubrifiantes de la masse d'eau utilisée pour laver les véhicules à moteur et pour évacuer séparément les huiles lubrifiantes et l'eau traitée, parmi lesquelles la première section (42) destinée à traiter l'eau reçoit l'eau qui tombe du lavage des véhicules à moteur garés dans une place de stationnement (10) en traversant une grille (24) et permet le dépôt, par décantation ou sédimentation, tout d'abord des matières plus lourdes et plus grossières, telles que les grains durs, le sable et les particules métalliques, puis, ensuite, la boue sous une forme floculée, telle que la boue résultant de la réaction des détergents, utilisés pendant le lavage, avec les huiles, la graisse et les substances bitumineuses qui se sont accumulées sur la carrosserie et les compartiments moteur des véhicules à moteur lavés, **caractérisées en ce que** la deuxième section de traitement de l'eau (44) utilise des moyens (82) pour réduire le flux d'eau (66) qui s'écoule à travers ladite section de manière à provoquer l'adhérence des particules plus petites et plus légères de la boue aux parois desdits moyens pour réduire (82), lesquels moyens (82) sont constitués par un ensemble de plaques parallèles arrangées verticalement dans la même direction que le flux d'eau (66), la distance entre les plaques étant du même ordre de grandeur que l'épaisseur desdites plaques.

2. Cuves selon la revendication 1, **caractérisées en ce que** les plaques de l'ensemble (82) sont ondulées et disposées avec les ondulations sensiblement parallèles.

3. Cuves selon la revendication 2, **caractérisées en ce que** les plaques de l'ensemble (82) sont faites de matières qui résistent aux agents chimiques présents dans l'eau.

4. Cuves selon la revendication 3, **caractérisées en ce que** les plaques de l'ensemble de plaques ondulées (82) sont montées sur un châssis qui peut être retiré pour le nettoyage périodique.

5. Cuves selon les revendications précédentes, **caractérisées en ce que** la deuxième section de traitement de l'eau (44) effectue aussi la séparation des résidus d'huiles lubrifiantes libres, en les faisant flotter sur la surface d'une étendue d'eau présente dans la cuve (44) en utilisant des moyens (92) destinés à réduire le flux d'eau de manière à réduire l'effet d'entraînement des gouttelettes d'huile par l'eau et à favoriser l'ascension de l'huile jusqu'à la surface par flottaison, lesquels moyens (92) destinés à réduire le flux d'eau sont constitués par un ensemble de plaques ondulées arrangées de manière à être orientées horizontalement et positionnées l'une au-dessus de l'autre, les crêtes et les creux des ondulations étant arrangées perpendiculairement par rapport à la direction du flux d'eau et les crêtes et ondulations étant pourvues de trous (93) ayant pour fonction de provoquer l'ascension de l'huile qui s'accumule sous les crêtes des plaques ondulées.

6. Cuves selon la revendication 5, **caractérisées en ce que** les plaques de l'ensemble de plaques (92) sont faites d'une matière résistante aux agents chimiques présents dans l'eau.

7. Cuves selon les revendications 5 et 6, **caractérisées en ce que** l'huile qui est amenée à flotter sur la surface de l'eau dans cette section est retenue dans la même section par une chicane d'arrêt immergée (96) qui s'étend de la surface de l'eau vers le bas jusqu'à une certaine profondeur, tandis qu'un premier tube d'évacuation (98), maintenu de niveau avec la surface de l'eau par un flotteur (100), effectue l'évacuation de l'huile séparée de l'eau.

8. Cuves selon la revendication 7, **caractérisées en ce que** l'eau qui a franchi la chicane immergée (96) concentre ses particules résiduelles d'huile, lorsqu'elles sont présentes, dans une section (102) confinée entre ladite première chicane immergée (96) et une deuxième chicane immergée (110), ladite section étant desservie par un deuxième tube de d'évacuation (106) maintenu de niveau avec la surface de l'eau par un flotteur (108) de manière à évacuer l'huile résiduelle de ladite section confinée (102).

9. Cuves pour traiter l'eau utilisée pour laver des véhicules à moteur et équipements garés dans des places de stationnement (10, 120) selon les revendications précédentes, comprenant une section additionnelle (40, 150) qui sert de moyens (40) pour stocker l'eau épurée ou de moyens (150) pour stocker la boue d'épuration résiduelle, **caractérisées en ce que** la section (40) destiné à stocker l'eau épurée reçoit par un premier tube (52) l'eau épurée en provenance d'un épurateur (188), la combine, si nécessaire, avec dé l'eau fournie par un deuxième tube (50) en provenance d'un réseau de distribution d'eau et l'envoie finalement à des moyens (186) destinés à chauffer et à ajouter des détergents destinés à être utilisés pendant le lavage des véhicules à moteur, et la section de stockage de la boue (150) reçoit de la boue (155) en provenance de l'épurateur d'eau (188), la distribue progressivement, et aussi uniformément que possible, sur son fond, signale à l'extérieur, au moyen d'un détecteur (160) le niveau atteint par ladite boue (156) de manière à indiquer la nécessité de vidanger ladite section (150), et transfère à la section de traitement suivante (42), par l'intermédiaire d'un moyen de coulée tel qu'un déversoir (158), toute l'eau qui peut être extraite de la boue (155) qui est décantée et tassée dans ladite section de stockage (150).

10. Cuves selon la revendication 8, **caractérisées en ce que**, dans cette section confinée (102), une sonde à ultrasons (104) est utilisée pour promouvoir la séparation des gouttelettes d'huile des particules résiduelles de la boue qui peuvent être présentes dans cette zone, en amenant les particules à se précipiter sur le fond et l'huile à s'élever vers la surface.

11. Cuves selon la revendication 10, **caractérisées en ce qu'**un filtre à osmose inverse (114) est utilisé pour filtrer définitivement l'eau ainsi traitée, en l'envoyant à une sortie d'évacuation (116) de la dernière section destinée à traiter l'eau, ce qui exige seulement un traitement final dans un épurateur (188) du type industriel afin d'éliminer l'éventuel résidu de détersifs, en obtenant ainsi de l'eau chimiquement pure.

12. Cuves selon la revendication 11, **caractérisées en ce que** le filtre à osmose inverse (114) comprend des cartouches céramiques qui sont résistantes à l'attaque par les produits chimiques ou à la détérioration par les hydrocarbures et qui peuvent être régénérées par un simple lavage à contre-courant, le résidu qui s'y est accumulé étant évacué dans la section de stockage de la boue (150).

13. Cuves selon les revendications 9 à 10, **caractérisées en ce que** l'eau filtrée par le filtre à osmose inverse (114) peut ensuite être stérilisée par des moyens physiques (115) tels que des lampes germicides.

14. Cuves selon les revendications 9 à 10, **caractérisées en ce que** l'eau filtrée par le filtre à osmose inverse (114) peut ensuite être stérilisée par des moyens chimiques, par exemple à l'aide d'halogènes ou d'ozone.

15. Cuves selon les revendications 9 à 14, **caractérisées en ce que** les sections destinées à stocker l'eau pure ou la boue (40, 150) et les sections (42, 44) destinées à traiter l'eau de lavage sont équipées de trous d'homme (22a-c, 132a-c ; 30a, 30b ; 36a-c) destinés à permettre d'accéder auxdites sections de façon à permettre l'exécution d'opérations de maintenance, de nettoyage et de vidange périodique desdites sections.
